# EUROPÄISCHE PATENTANMELDUNG

(11) **EP 1 227 301 A1**
(43) Veröffentlichungstag der Anmeldung: **31.07.2002**
(21) Anmeldenummer: 01101977.5
(22) Anmeldetag: 29.01.2001
(51) Int. Cl.: G01C 21/20

(54) **Positionsbestimmung mit Handyunterstützung**

(71) Anmelder: SIEMENS AKTIENGESELLSCHAFT, 80333 München (DE)
(72) Erfinder: Bock, Gerhard, 82152 Krailing (DE)

(57) **Zusammenfassung**

Die Erfindung betrifft ein Verfahren zur Positionsbestimmung unter Verwendung einer kommunikationsfähigen Bildaufnahmeeinrichtung, bei dem ein Bilddatensatz an eine Zentralstelle übermittelt wird, dort der Bildinhalt hinsichtlich seiner Position ausgewertet, und das Ergebnis zur Bildaufnahmeeinrichtung zurückübertragen und ausgegeben wird.

## Beschreibung

Die Erfindung betrifft Verfahren zur Positionsbestimmung unter Verwendung einer kommunikationsfähigen Bildaufnahmeeinrichtung

Eine solche Bildaufnahmeeinrichtung ist beispielsweise ein Video-Mobilfunkgerät, ein sogenanntes Videohandy, oder eine digitale Kamera mit Anbindung an ein Mobilfunknetz.

Bei Besichtigungstouren in fremden Städten ist manchmal die momentane Position für die Orientierung interessant. Zudem ist unter Umständen der Name eines im Sichtfeld befindlichen Bauwerkes wünschenswert. Bisher sind diese Informationen nur durch Befragung von Passanten zu erhalten.

Der Erfindung liegt die Aufgabe zugrunde, ein Verfahren der eingangs genannten Art anzugeben.

Diese Aufgabe wird erfindungsgemäß alternativ durch die im Patentanspruch 1 oder 2 angegebenen Merkmale gelöst.

Im Folgenden wird die Erfindung anhand eines Ausführungsbeispieles beschrieben.

Die Erfindung geht aus von einem Video-Mobilfunkgerät oder einer digitalen Kamera.

Zur Positionsbestimmung oder zur Abfrage von Informationen zu Gebäuden oder ähnlichem richtet man beispielsweise bei einer Besichtigungstour in der Stadt oder auch im Gelände die Kamera auf markante Details in der Umgebung und macht ein Bild davon. Das Kamerabild wird erfindungsgemäß beispielsweise mit einer City-Guide-Datenbank verglichen und die gewünschte Auskunft aus dem Bildinhalt gewonnen. Letztlich führt auch der Name eines Gebäudes zu einer Positionsbestimmung.

Diese Datenbank kann entweder über Funk in das Mobilfunkgerät beziehungsweise in die digitale Kamera geladen werden oder sie wird per Speichermedium eingesteckt, beispielsweise in Form einer MultiMediaKarte.

Bei einer Variante der Erfindung wird die Auswertung des Bildes in einer Zentralstelle vorgenommen, beispielsweise in einem an das Mobilfunknetz angeschlossenen Server der Stadtverwaltung.

## Patentansprüche

1. Verfahren zur Positionsbestimmung unter Verwendung einer kommunikationsfähigen Bildaufnahmeeinrichtung, bei dem ein Bilddatensatz an eine Zentralstelle übermittelt wird, dort der Bildinhalt hinsichtlich seiner Position ausgewertet, und
das Ergebnis zur Bildaufnahmeeinrichtung zurückübertragen und ausgegeben wird.

2. Verfahren zur Positionsbestimmung unter Verwendung einer kommunikationsfähigen Bildaufnahmeeinrichtung, bei dem eine Bilddatenbank in die Bildaufnahmeeinrichtung geladen wird, wobei zu den Bildinhalten positionsbestimmende Daten gespeichert sind,
der Inhalt eines aufgenommenen Bildes mit der Bilddatenbank verglichen und die Daten ausgegeben werden.
